# EUROPÄISCHE PATENTSCHRIFT

(11) **EP 1 241 405 B1**
(45) Veröffentlichungstag und Bekanntmachung des Hinweises auf die Patenterteilung: **13.07.2005**
(21) Anmeldenummer: 02005847.5
(22) Anmeldetag: 14.03.2002
(51) Int. Cl.: F21V 31/00, F21S 8/00, B64F 1/20, E01F 9/06

(54) **Unterflurfeuer für Verkehrsflächen, wie Flughafenrollwege oder Strassen**
Flush mounted light for traffic surfaces, such as airport runways or roads
Feu de balisage encastré pour surfaces de circulation, notamment voies de roulement ou routes

(30) Priorität: 14.03.2001 DE 10112616
(43) Veröffentlichungstag der Anmeldung: 18.09.2002
(73) Patentinhaber: SIEMENS AKTIENGESELLSCHAFT, 80333 München (DE)
(72) Erfinder: Laenen, Guy, 3080 Tewuren (BE); Moons, Ludo, 1982 Elewist (BE)

(56) Entgegenhaltungen:
- EP-A- 0 653 351
- EP-A- 0 940 626
- DE-U- 29 800 634
- GB-A- 950 354
- GB-A- 1 127 850

## Beschreibung

Die Erfindung bezieht sich auf ein Unterflurfeuer nach dem Oberbegriff des Patentanspruchs 1.

Derartige Unterflurfeuer sind Witterungseinflüssen und insbesondere auch nicht unbeträchtlichen mechanischen Beanspruchungen ausgesetzt. Darüber hinaus sollen sie einen möglichst kleinen Überstand über das Oberflächenniveau der sie aufnehmenden Verkehrsfläche aufweisen, um bei Überrollungen möglichst keine bzw. möglichst geringe Belastungen des sie überrollenden Geräts zu verursachen.

Aus der EP 0 635 351 A1 ist ein Unterflurfeuer für Flughäfen bekannt, das eine Quetschdichtung zur Abdichtung seiner als Prismenanordnung ausgebildeten Optikeinrichtung aufweist. Diese Quetschdichtung wird den Anforderungen an die Dichtigkeit derartiger Unterflurfeuer im Dauerbetrieb nicht gerecht. Auch sonst können bei diesem Unterflurfeuer auf Dauer Undichtigkeiten auftreten.

Die GB 1 127 850 zeigt ein Unterflurfeuer, bei dem zur Verhinderung des Eindringens von Feuchtigkeit etc. in den Innenraum unterhalb des Deckels des Unterflurfeuers zwischen dem Deckel und dem Gehäuse des Unterflurfeuers zwei voneinander getrennte Dichtelemente vorgesehen sind. Die Optikeinrichtung dieses Unterflurfeuers wird durch einen an der Unterseite des Deckels ausgebildeten Spiegel und eine in den Deckel integrierte Glasscheibe gebildet, durch die hindurch das von der Lichtquelle des Unterflurfeuers erzeugte Licht abgestrahlt wird.

Der Erfindung liegt die Aufgabe zugrunde, das eingangs geschilderte Unterflurfeuer für Verkehrsflächen von z.B. Flughäfen derart weiterzubilden, dass auf Dauer jedweden Dichtigkeitsanforderungen unabhängig von der Beeinflussung aufgrund der Witterungsverhältnisse auch während des Verlaufs von Überrollungen od.dgl. mechanischen Beanspruchungen genügt werden kann, wobei darüber hinaus ein exakter Sitz des Deckels in Bezug auf das Gehäuse und eine mit einem hohen Wirkungsgrad einhergehende Lichtabstrahlung zu gewährleisten ist.

Diese Aufgabe wird erfindungsgemäß durch die Merkmale im kennzeichnenden Teil des Patentanspruchs 1 gelöst. Dadurch, dass erfindungsgemäß auf allen möglichen Wegen, über die Feuchtigkeit in den unterhalb des Deckels vorgesehenen Innenraum eindringen könnte, zumindest zwei Dichtelemente angeordnet sind, ist auch bei unterschiedlichen Beanspruchungen des Unterflurfeuers sichergestellt, dass weder Feuchtigkeit noch irgendwelche Fremdpartikel od.dgl. in den Innenraum des Unterflurfeuers eindringen können, da bei den denkbaren mechanischen Beanspruchungen des Unterflurfeuers in jedem Fall zumindest ein Dichtelement der Dichtungsvorrichtung seine Abdichtfunktion vollständig aufrecht erhält. Die zur Erhöhung des Wirkungsgrads bei der Lichtabstrahlung als Prismenanordnung ausgebildete Optikeinrichtung lässt sich mittels einer zwei unterschiedliche Dichtflächen aufweisender Dichtmanschette aus einem elastomeren Werkstoff abgedichtet im Öffnungsbereich des Deckels aufnehmen. Durch den Dichtrillenabschnitt, der in Vertikalrichtung des Unterflurfeuers orientiert ist, wird ein Dichtungslabyrinth ausgebildet.

Gemäß Patentanspruch 2 können die jeweiligen Dichtflächen vorteilhaft um 90° gegeneinander versetzt angeordnet werden, wobei diese um 90° zueinander geneigte Anordnung der jeweils zwei einander gegenüberliegenden Flächenabschnitte in vergleichsweise einfacher Weise eine stets korrekte Positionierung des Deckels in Bezug auf das Gehäuse sichert, wodurch die vorgegebenen Abstrahleigenschaften des Unterflurfeuers exakt eingehalten werden können.

Vorteilhaft ist die Ausgestaltung gemäß Patentanspruch 3.

Gemäß Patentanspruch 4 können für das erste Dichtelement quasi voneinander unabhängige Abdichtungsstufen in Form eines Labyrinths erreicht werden.

Eine um 90° versetzte Anordnung des zweiten Dichtelements in Bezug auf das erste Dichtelement der Dichtungsvorrichtung lässt sich in mechanisch-konstruktiv wenig aufwendiger Weise gemäß Patentanspruch 5 erreichen.

Um eine Abstrahlung des Unterflurfeuers in zwei Richtungen zu gewährleisten, ist die Ausgestaltung gemäß Patentanspruch 6 zweckmäßig. Auch diese unterschiedlichen Dichtflächen sind vorteilhaft unter einem Winkel von 90° zueinander angeordnet.

Die Ausgestaltung gemäß Patentanspruch 7 lässt in jedem Fall eine korrekte Positionierung der Dichtmanschette in Bezug auf den Öffnungsbereich des Deckels zu und hat eine weitere Verbesserung der Dichtigkeitseigenschaften zur Folge.

Entsprechend ist die Ausgestaltung gemäß Patentanspruch 8 zweckmäßig.

Eine weitere Verbesserung der Dichtigkeitseigenschaften wird gemäß Patentanspruch 9 erzielt, wobei sich durch diese Orientierung bzw. Anordnung der der Dichtung dienenden Dichtrillenabschnitte bzw. Dichtrippen eine korrekte Positionierung der Prismen innerhalb der Dichtmanschette ohne weiteres gewährleisten lässt.

Gemäß Patentanspruch 10 kann der Dichtrillenabschnitt höchsten Anforderungen an die Dichtigkeit ohne weiteres genügen.

Zur korrekten Positionierung zweier Prismen innerhalb einer Dichtmanschette ist die Ausgestaltung gemäß Patentanspruch 11 vorteilhaft.

Die Dichtmanschette besteht zweckmäßigerweise aus einem Elastomer od.dgl.

Die Dichtmanschette einschließlich der Optikeinrichtung lässt sich gemäß Patentanspruch 13 korrekt in Bezug auf den Deckel und damit in Bezug auf die Lichtquelle positionieren, wobei die vergleichsweise große Vertikalerstreckung der Halteplatte eine starre Ausgestaltung derselben zur Folge hat, die gemeinsam mit der Vielzahl der zur Verbindung der Halteplatte mit dem Deckel verwendeten Schrauben sicherstellt, dass die Halteplatte keine Verformungen erfährt, die eine Ungenauigkeit der Anordnung der Optikeinrichtung in Bezug auf den Deckel zur Folge haben könnten.

Als für die Halteplatte besonders geeigneter Werkstoff hat sich Aluminium erwiesen.

Der Durchtritt von Feuchtigkeit, Fremdstoffen, Staubpartikeln od.dgl. in den Zwischenraum zwischen dem Deckel und dem unteren Abschlusselement desselben wird gemäß Patentanspruch 15 vorteilhaft erschwert.

Beim Zusammenbau des Unterflurfeuers wird die Halteplatte mittels des durch die Schrauben bzw. deren Betätigung erzeugten, in Vertikalrichtung wirkenden Druckes gegen die Prismen der Prismenanordnung gedrückt bzw. gepresst. Die Prismen selbst werden mit ihren Schultern, die in Horizontalebenen orientiert sind, gegen entsprechende Horizontalabschnitte der Dichtmanschette gedrückt bzw. gepresst; die Dichtmanschette wiederum wird in bzw. gegen den Öffnungsbereich des Deckels gedrückt bzw. gepresst. Mittels dieses Andrück- bzw. Anpressvorgangs wird die Dichtungsfunktion der aus einem nachgiebigen bzw. elastomeren Werkstoff bestehenden Dichtmanschette gewährleistet. Jedoch besteht bei diesem Andrück- bzw. Anpressvorgang die Gefahr, dass ein zwischen die Halteplatte einerseits und die Dichtmanschette bzw. den Öffnungsbereich des Deckels andererseits eingeklemmtes Prisma um seine Spitze gedreht bzw. gekippt wird, da bei der Herstellung des Deckels, der Dichtmanschette, der Prismen und der Halteplatte Fertigungstoleranzen vorliegen; die daraus potentiell resultierenden Drehbewegungen bzw. Verkippungen des Prismas bzw. der Prismen um seine Spitze bzw. ihre Spitzen in Verbindung mit den elastomeren bzw. nachgiebigen Eigenschaften des Werkstoffs der Dichtmanschette können zu permanenten Abweichungen des Prisma bzw. der Prismen von der Sollposition führen, die trotz ihrer Geringfügigkeit die optischen Eigenschaften und damit die Abstrahlleistung des Unterflurfeuers nachteilig beeinträchtigen. Bei der Ausgestaltung gemäß Patentanspruch 16 wird erreicht, dass das Gesamtdrehmoment um die Spitzenkante des Prismas minimiert wird bzw. verschwindet, da die über die beiden Schultern des Prismas erzeugten Drehmomente einander entgegengerichtet sind und einander aufheben.

Mittels des gemäß Patentanspruch 17 gestalteten Unterflurfeuers ist kostengünstig Licht in eine Richtung oder in zwei Richtungen abstrahlbar. Sofern Licht in zwei Richtungen abstrahlbar ist, können diese auf einer Linie liegen oder zueinander geneigt sein. Das Unterflurfeuer ragt mit seinem Deckel nur geringfügig über das Oberflächenniveau der Verkehrsfläche hinaus.

Im folgenden wird die Erfindung an Hand einer Ausführungsform unter Bezugnahme auf die Zeichnung näher erläutert.

Es zeigen:
- FIG 1: eine Schnittdarstellung einer Ausführungsform eines erfindungsgemäßen Unterflurfeuers für Verkehrsflächen auf Flughäfen;
- FIG 2: eine Explosionsdarstellung eines Deckels des in FIG 1 gezeigten erfindungsgemäßen Unterflurfeuers;
- FIG 3: den vergrößerten Ausschnitt A aus FIG 2; und
- FIG 4: eine Prinzipdarstellung eines Prismas des erfindungsgemäßen Unterflurfeuers.

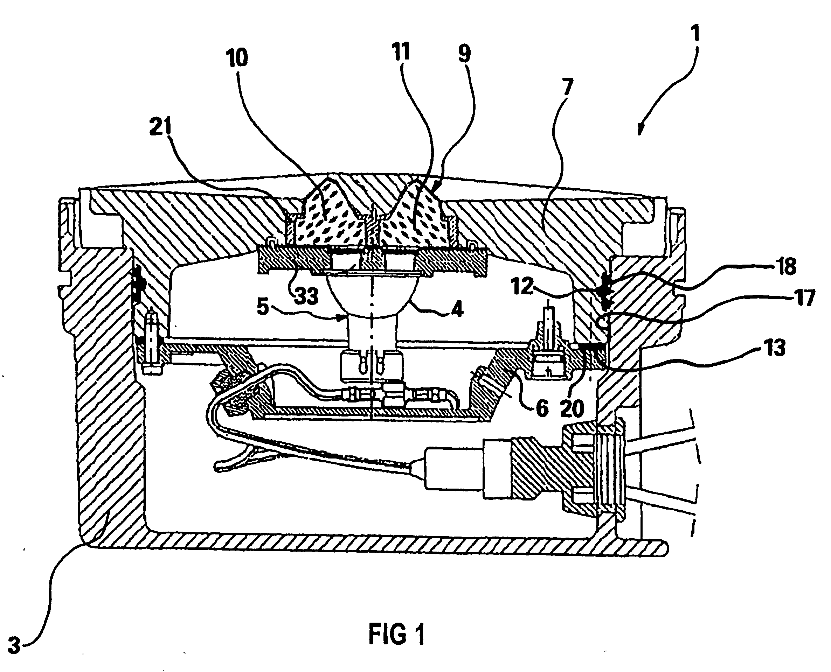

Eine in FIG 1 in Schnittdarstellung gezeigte erfindungsgemäße Ausführungsform eines Unterflurfeuers 1 dient zur Markierung, Signalgebung ud.dgl. auf Verkehrsflächen, z.B. von Flughäfen, etwa Rollbahnen, Taxiways etc., aber auch auf Straßen, Parkplätzen o.ä..

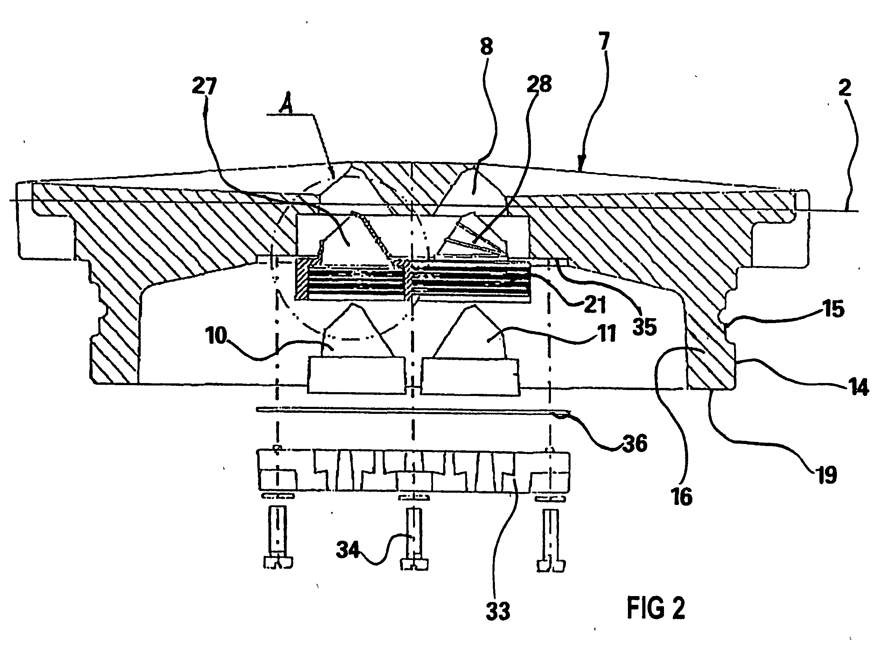

Hierzu ist das Unterflurfeuer 1 im wesentlichen unterhalb der Oberfläche der Verkehrsfläche angeordnet, wobei diesbezüglich zur Verdeutlichung in FIG 2 durch den Strich 2 das Oberflächenniveau der Verkehrsfläche gezeigt ist. Bei erfindungsgemäßen Unterflurfeuern 1 wird erreicht, dass das Unterflurfeuer lediglich um einige Millimeter, in besonderen Ausführungsformen lediglich um 2 mm bis 4 mm, über das Oberflächenniveau 2 der Verkehrsfläche vorragt.

Das Unterflurfeuer 1 hat ein in einer Ausnehmung in der Verkehrsfläche angeordnetes Gehäuse 3, in dessen Innenraum die für die Funktion und die Steuerung des Unterflurfeuers 1 wesentlichen Funktionselemente aufgenommen sind. Hierzu gehört insbesondere eine oder zwei mit einem Reflektor 4 versehene Lichtquelle(n) 5, welche mittels weiterer im Innenraum des Gehäuses 3 vorgesehener Installationen, beispielsweise einer Halterung 6 und Anschlüssen ud.dgl., im Innenraum des Gehäuses 3 gehaltert und dort mit elektrischer Energie versorgt wird.

An seiner im Bereich des Oberflächenniveaus 2 der Verkehrsfläche angeordneten Oberfläche ist das Gehäuse mittels eines Deckels 7 geschlossen, so dass der Innenraum des Gehäuses 3 abgeschlossen und die Oberfläche des Deckels 7 im wesentlichen fluchtend mit dem Oberflächenniveau 2 der Verkehrsfläche angeordnet ist, wobei der vorstehend bereits erwähnte vertikale Überstand von einigen Millimetern auftreten kann.

In ihrem Mittelabschnitt hat der Deckel 7 einen Öffnungsbereich 8, in den, wie aus einer Zusammenschau der FIG 1 bis 3 hervorgeht, eine Optikeinrichtung in Form einer Prismenanordnung 9 mit zwei Prismen 10, 11 eingesetzt ist. Mittels der Prismenanordnung 9 bzw. der Prismen 10, 11 derselben wird durch die Lichtquelle 5 erzeugtes und durch den Reflektor 4 zu den Prismen 10, 11 gerichtete Lichtstrahlung durch den Deckel 7 in der gewünschten Weise abgestrahlt.

Das Unterflurfeuer 1 ist im Bereich seines Deckels 7 Witterungs- und anderen Einflüssen ausgesetzt. Um zu verhindern, dass Feuchtigkeit, Staubpartikel od.dgl. in den Innenraum des Gehäuses 3 eintreten können, ist zwischen dem Deckel 7 und dem Gehäuse 3 eine Dichtungsvorrichtung vorgesehen, die ein erstes Dichtelement 12 und ein zweites Dichtelement 13 aufweist. Das erste Dichtelement 12 und das zweite Dichtelement 13 sind separat ausgebildete und im dargestellten Ausführungsbeispiel unterschiedlich gestaltete Dichtelemente 12, 13.

Im dargestellten Ausführungsbeispiel hat der Deckel 7 als einen das erste Dichtelement 12 aufnehmenden Flächenabschnitt eine Außenmantelfläche 14, in der eine umlaufende Aufnahmenut 15 ausgebildet ist, die das erste Dichtelement 12 haltert. Mit seinem die Außenmantelfläche 14 ausbildenden Ringvorsprung 16 (Innenkragen) steht der Deckel 7 in das Gehäuse 3 nach unten vor. Die Außenmantelfläche 14 des Ringvorsprungs 16 (Innenkragen) ist hierbei in Anlage an einen als Innenmantelfläche 17 des Gehäuses 3 ausgebildeten Flächenabschnitt, wobei das erste Dichtelement 12 drei in Richtung auf die Innenmaritelfläche 17 des Gehäuses 3 vorstehende Dichtlippen 18 aufweist.

Die Außenmantelfläche 14 des Ringvorsprungs 16 des Deckels 7 sowie die Innenmantelfläche 17 des Gehäuses 3 sind in Vertikal- bzw. Axialrichtung des Unterflurfeuers 1 orientiert.

Das des weiteren zur Dichtungsvorrichtung 12, 13 gehörende zweite Dichtelement 13 ist zwischen der Stirnringfläche 19 des Deckels 7 bzw. des Ringvorsprungs 16 einerseits und einem Ringflächenabschnitt 20 des im Innenraum des Gehäuses 3 angeordneten Abschlusselements 6 angeordnet und als üblicher Dichtungsring ausgebildet. Die deckelseitige Stirnringflache 19 sowie der halterungsseitige Ringflachenabschnitt 20 sind in Horizontalrichtung des Unterflurfeuers 1 orientierte Flachenabschnitte, so dass sie zu der Außenmantelfläche 14 des Ringvorsprungs 16 des Deckels 7 und damit zur Innenmantelfläche 17 des Gehäuses 3 um ca. 90 Grad geneigt sind. Durch das erste Dichtelement 12 und das zweite Dichtelement 13 wird somit eine mehrstufige Dichtungsvorrichtung 12, 13 geschaffen, wobei mittels der Dichtungsvorrichtung 12, 13 Dichtwirkung zwischen unterschiedlich angeordneten bzw. zueinander geneigten deckelseitigen Flächenabschnitten 14, 19 einerseits und gehäuseseitigen Flächenabschnitten 17, 20 andererseits realisiert wird.

In der gehäuseseitigen Halterung 6 sind im in FIG 1 dargestellten Ausführungsbeispiel des erfindungsgemäßen Unterflurfeuers 1 Durchbrechungen vorgesehen, die Anschlusszwecken od.dgl. dienen. Jede dieser Durchbrechungen der Halterung 6 ist mittels O-Ringdichtungen abgedichtet. So entsteht auch hier die erfindungsgemäße zweistufige Abdichtung.

Um auch im mit dem Öffnungsbereich 8 versehenen Mittelbereich des Deckels 7, in dem die Prismenanordnung 9 angeordnet ist, das Eindringen von Feuchtigkeit, Staubpartikeln, Fremdkörpern ud.dgl. zu verhindern, sitzt zwischen der Prismenanordnung 9 bzw. den Prismen 10, 11 und dem den Öffnungsbereich 8 umgebenden Abschnitt des Deckels 7 eine Dichtmanschette 21, die aus einem elastomeren Werkstoff, vorzugsweise aus einem Gummiwerkstoff, ausgebildet ist.

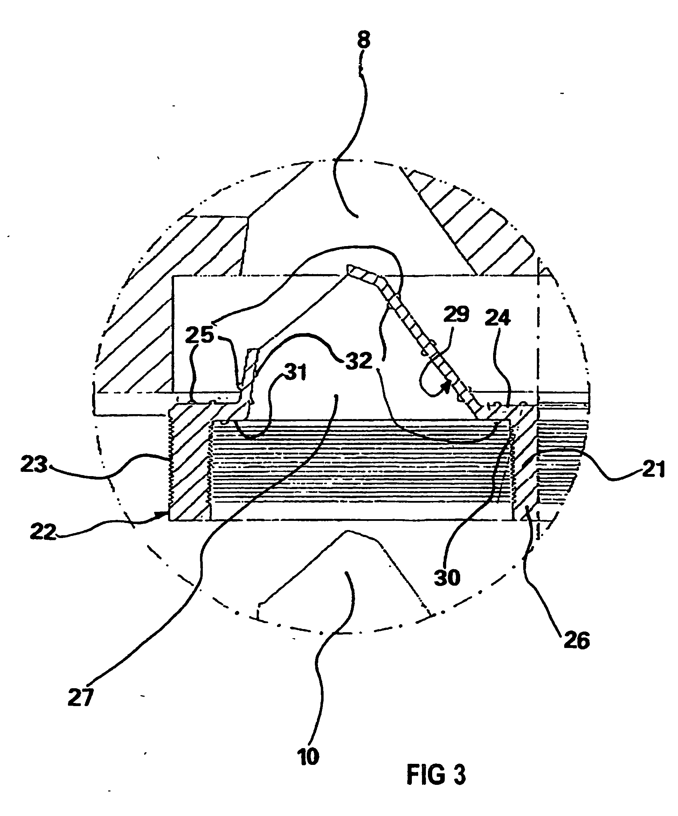

Die Dichtmanschette 21 ist in FIG 2 auf ihrer rechten Seite in einer Außenansicht und auf ihrer linken Seite im Schnitt dargestellt. Die äußere Formgebung der Dichtmanschette 21 entspricht im wesentlichen der Kontur des Öffnungsbereichs 8 des Deckels 7, wie sich am besten aus den FIG 2 und 3 ergibt.

Die Dichtmanschette weist auf ihrer am Öffnungsbereich 8 des Deckels 7 anliegenden Außenfläche 22 einen umlaufenden Dichtrillenabschnitt 23 auf, der auf einem in Vertikalrichtung des Unterflurfeuers 1 orientierten Außenflächenabschnitt der Dichtmanschette 21 angeordnet ist. Der Dichtrillenabschnitt 23 hat eine Vielzahl in Vertikalrichtung unmittelbar aufeinander folgender Dichtrillen.

Auf anderen Außenflächenabschnitten der Dichtmanschette 21, beispielsweise auf einem Horizontalabschnitt 24, sind zueinander beabstandete Dichtrippen 25 ausgebildet. Durch den Dichtrillenabschnitt 23 und die Dichtrippen 25 auf der Außenfläche 22 der Dichtmanschette 21 wird eine absolut dichte Abdichtung zwischen der Dichtmanschette 21 einerseits und dem Öffnungsbereich 8 des Deckels 7 andererseits erzielt.

Die Dichtmanschette 21 weist einen Mittelsteg 26 auf, der - im dargestellten Ausführungsbeispiel - einen Aufnahmeraum 27 für das eine Prisma 10 der Prismenanordnung 9 von einem Aufnahmeraum 28 für das andere Prisma 11 der Prismenanordnung 9 trennt. Die beiden Prismen 10, 11 der Prismenanordnung 9 sind somit an ihren einander gegenüberliegenden Seiten durch den Mittelsteg 26 der Dichtmanschette 21 voneinander getrennt.

Da die beiden Aufnahmeräume 27, 28 einander entsprechen, wird im folgenden - insbesondere an Hand von FIG 3 - der in den FIG 2 und 3 linke Aufnahmeraum 27, der dem Prisma 10 der Prismenanordnung 9 zugeordnet ist, beschrieben.

Der linke Aufnahmeraum 27 der Dichtmanschette 21 besitzt auf seiner Innenfläche 29 einen in Vertikalrichtung des Unterflurfeuers 1 orientierten Dichtrillenabschnitt 30, der aus einer Vielzahl in Vertikalrichtung unmittelbar aufeinanderfolgender Dichtrillen besteht. Auf weiteren Innenflächenabschnitten des linken Aufnahmeraums 27, insbesondere auf einem Horizontalabschnitt 31, sind weitere, zueinander beabstandete Dichtrippen 32 vorgesehen. Mittels des Dichtrillenabschnitts 30 und der Dichtrippen 32 ist eine absolut zuverlässige Abdichtung zwischen der Innenfläche 29 der Aufnahmeräume 27, 28 der Dichtmanschette 21 einerseits und den Prismen 10, 11 der Prismenanordnung 9 andererseits gewährleistet.

Wie sich insbesondere aus FIG 2 ergibt, sind die Prismenanordnungen 9 mit den Prismen 10, 11 und die Dichtmanschette 21 mittels einer Halteplatte 33 im Öffnungsbereich 8 des Deckels 7 positioniert und gehaltert. Die Halteplatte 33 ist beispielsweise aus Aluminium ausgebildet und hat in Vertikalrichtung des Unterflurfeuers 1 eine vergleichsweise große Abmessung, so dass die Halteplatte 33 über eine Starrheit verfügt, die jedwede Verformungen weitestgehend bzw. vollständig ausschließt. Die Halteplatte 33 ist mittels einer Vielzahl Schrauben 34 an der Unterseite 35 des Deckels 7 befestigt, wobei zwischen der Oberseite der Halteplatte 33 und der Unterseite 35 des Deckels 7 eine Flachdichtung 36 angeordnet ist. Beim Zusammenmontieren der Prismenanordnung 9, der Dichtmanschette 21 und des Deckels 7 mittels der Halteplatte 33 bzw. der Schrauben 34 werden die Schrauben 34 angezogen, so dass die beiden Prismen 10, 11 in die Aufnahmeräume 27, 28 der Dichtmanschette 21 hineingedrückt und die Dichtmanschette 21 ihrerseits in den Öffnungsbereich 8 des Deckels 7 hineingedrückt wird. Hierdurch können sowohl die dichtmanschettenseitigen Dichtrillenabschnitte 23, 30 als auch die auf der Außenfläche 22 der Dichtmanschette 21 ausgebildeten Dichtrippen 25 bzw. die auf der Innenfläche 29 der Dichtmanschette 21 ausgebildeten Dichtrippen 32 ihre abdichtende Wirkung voll entfalten.

Mittels der vorhandenen Passflächen und um ca. 90° zueinander versetzten Anordnung des ersten Dichtelements 12 und des zweiten Dichtelements 13 lässt sich des weiteren die Positionierung des Deckels 7 in Bezug auf das Gehäuse 3 dauerhaft einhalten. Entsprechendes gilt für die Prismen, wobei eine entsprechend korrekte Positionierung der Prismenanordnung 9 im Öffnungsbereich 8 des Deckels 7 durch die zueinander geneigte Anordnung der Dichtrillenabschnitte 23, 30 und der mit Dichtrippen 25 bzw. 32 versehenen Außen- bzw. Innenflächenabschnitte der Dichtmanschette 21 unterstützt wird.

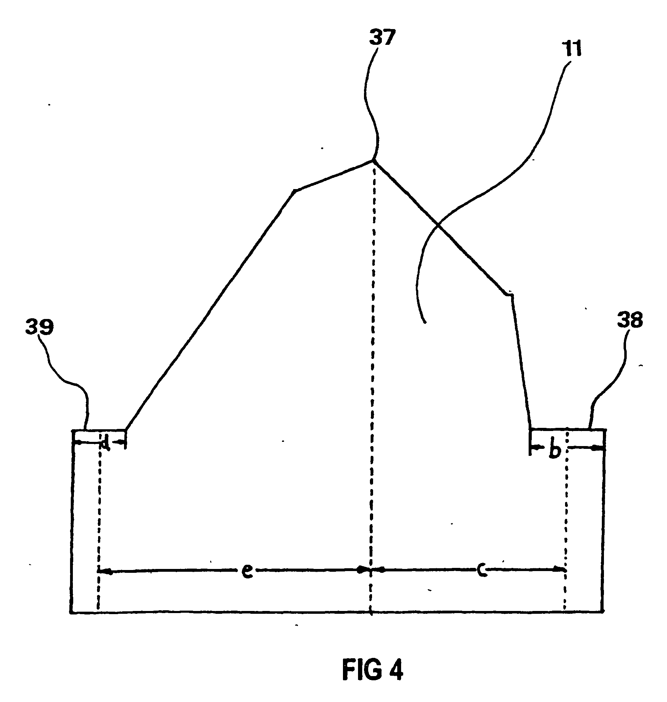

Das in FIG 4 im Prinzip dargestellte Prisma 11 des vorstehend näher erläuterten Unterflurfeuers 1 entspricht mit Ausnahme der Orientierung innerhalb der Prismenanordnung 9 vollständig dem anderen Prisma 10 der Prismenanordnung 9, so dass die folgenden Ausführungen analog auch für letzteres gelten.

Das Prisma 11 hat, wie sich aus FIG 4 ergibt, eine Spitzenkante 37; bei dem Zusammenbau des Unterflurfeuers 1 besteht die Gefahr, dass das Prisma 11 um seine Spitzenkante 37 gedreht bzw. gekippt wird.

Um dies zu vermeiden, sind zwei in Horizontalrichtung orientierte und in Horizontalrichtung auf unterschiedlichen Seiten der Spitzenkante 37 angeordnete Schultern 38, 39, die den Horizontalabschnitten 24 der Dichtmanschette 21 zugeordnet sind, hinsichtlich ihrer Abmessungen so ausgeführt, dass das Produkt der Multiplikation aus der Breite b der in FIG 4 rechten Schulter 38 des Prismas 11 und dem Horizontalabstand c zwischen der Mitte der Schulter 38 einerseits und der Spitzenkante 37 des Prismas 11 andererseits dem Produkt der Multiplikation aus der Breite d der in FIG 4 linken Schulter 39 des Prismas 11 und dem Horizontalabstand e zwischen der Mitte der Schulter 39 einerseits und der Spitzenkante 37 des Prismas 11 andererseits entspricht.

## Patentansprüche

1. Unterflurfeuer für Verkehrsflächen, z.B. auf Flughäfen, und Straßen, mit einem Gehäuse (3), das in die Verkehrsfläche eingelassen ist, einer Lichtquelle (5), die in dem Gehäuse (3) aufgenommen ist, einem Deckel (7), mittels dem das Gehäuse (3) verschließbar ist und der einen Öffnungsbereich (8) aufweist, einer als Prismenanordnung (9) ausgebildeten Optikeinrichtung, die im Öffnungsbereich (8) des Deckels (7) mittels einer zwei Dichtflächen aufweisenden Dichtmanschette (21) aus einem elastomeren Werkstoff abgedichtet angeordnet und gehaltert ist und mittels der Licht von der Lichtquelle (5) richt- und durch den Deckel (7) gerichtet abstrahlbar ist, und einem Dichtelement (12), das zwischen dem Deckel (7) und dem Gehäuse (3) angeordnet ist, **dadurch gekennzeichnet, dass** das Dichtelement (12) zu einer ein weiteres Dichtelement (13) aufweisenden Dichtungsvorrichtung (12, 13) gehört, deren weiteres Dichtelement (13) zwischen dem Deckel (7) und einem im Innenraum des Gehäuses (3) angeordneten und die Lichtquelle (5) halternden Abschlußelement (6) angeordnet ist, wobei das eine Dichtelement (12) zwischen in Vertikalrichtung des Unterflurfeuers (1) orientierten gehäuse- bzw. deckelseitigen Mantelflächen (14 bzw. 17) und das weitere Dichtelement (13) zwischen in Horizontalrichtung orientierten deckel- bzw. abschlußelementseitigen Stirnringflächen (19 bzw. 20) angeordnet ist, und dass die Dichtflächen der Dichtmanschette (21) unterschiedlich ausgebildet sind, wobei die Dichtmanschette (21) auf ihrer am Öffnungsbereich (8) des Deckels (7) anliegenden Außenfläche einen Dichtrillenabschnitt (23), der in Vertikalrichtung des Unterflurfeuers (1) orientiert ist, sowie einen dichtrillenabschnittfreien Horizontalabschnitt (24) aufweist.

2. Unterflurfeuer nach Anspruch 1, bei dem das erste Dichtelement (12) zwischen zwei einander gegenüberliegenden, nach unten weisenden Flächenabschnitten (14, 17) auf einem Innenkragen des Deckels (7) einerseits und des Gehäuses (3) andererseits angeordnet ist, und das zweite Dichtelement (13) zwischen dem Innenkragen und einem unteren Abschlusselement (6) des Deckel (7) angeordnet ist.

3. Unterflurfeuer nach Anspruch 2, bei dem das erste Dichtelement (12) zwischen einer in Vertikalrichtung des Unterflurfeuers (1) angeordneten Außenmantelfläche (14) des Deckels (7) und einer in Vertikalrichtung des Unterflurfeuers (1) angeordneten Innenmantelfläche (17) des Gehäuses (3) angeordnet ist.

4. Unterflurfeuer nach Anspruch 3, bei dem das erste Dichtelement (12) in einer deckelseitigen Aufnahmenut (15) gehaltert und mit mehreren, vorzugsweise drei, zur Innenmantelfläche (17) des Gehäuses (3) gerichteten Dichtlippen (18) versehen ist.

5. Unterflurfeuer nach einem der Ansprüche 1 bis 4, bei dem das zweite Dichtelement (13) zwischen einer in Horizontalrichtung des Unterflurfeuers (1) angeordneten Stirnringfläche (19) am Innenkragen des Deckels (7) und einem in Horizontalrichtung des Unterflurfeuers (1) angeordneten Ringflächenabschnitt (20) dem im Gehäuse (3) angeordneten unteren Abschlusselement (6) angeordnet ist.

6. Unterflurfeuer nach einem der Ansprüche 1 bis 5, bei dem die Prismenanordnung (9) zwei Prismen (10, 11) aufweist, die gemeinsam in der vorzugsweise einstückig ausgebildeten Dichtmanschette (21) mit zwei unterschiedlichen Dichtflächen sitzen.

7. Unterflurfeuer nach einem der Ansprüche 1 bis 6, bei dem die Dichtmanschette (21) auf ihrer am Öffnungsbereich (8) des Deckels (7) anliegenden dichtrillenabschnittfreien Außenfläche (22) Dichtrippen (25) aufweist, von denen zumindest einige auf Horizontalabschnitten (24) der Außenfläche (22) der Dichtmanschette (21) angeordnet sind.

8. Unterflurfeuer nach einem der Ansprüche 1 bis 7, bei dem die Dichtmanschette (21) auf ihrer gegen die Prismen (10, 11) anliegenden Innenfläche (29) je Prisma (10, 11) einen Dichtrillenabschnitt (30) aufweist, der in Vertikalrichtung des Unterflurfeuers (1) orientiert ist.

9. Unterflurfeuer nach Anspruch 8, bei dem die Dichtmanschette (21) auf ihrer an den Prismen (10, 11) anliegenden dichtrillenabschnittfreien Innenfläche (29) Dichtrippen (32) aufweist, von denen zumindest eine auf einem Horizontalabschnitt (31) der Innenfläche (29) der Dichtmanschette (21) angeordnet ist.

10. Unterflurfeuer nach einem der Ansprüche 1 bis 9, bei dem jeder Dichtrillenabschnitt (23, 30) aus einer Vielzahl in Vertikalrichtung unmittelbar nebeneinander angeordneter Dichtrillen besteht.

11. Unterflurfeuer nach einem der Ansprüche 1 bis 10, bei dem die Dichtmanschette (21) einen Mittelsteg (26) aufweist, mittels dem die zwei in der Dichtmanschette (21) aufgenommenen Prismen (10, 11) getrennt sind und zu dem die Dichtmanschette (21) symmetrisch ist.

12. Unterflurfeuer nach einem der Ansprüche 1 bis 11, bei dem die Dichtmanschette (21) aus einem Gummiwerkstoff od.dgl. ausgebildet ist.

13. Unterflurfeuer nach einem der Ansprüche 1 bis 12, bei dem die Optikeinrichtung (9) und die Dichtmanschette (21) mittels einer Halteplatte (33) im Öffnungsbereich (8) des Deckels (7) fixiert sind, wobei die Halteplatte (33) eine vergleichsweise große Vertikalerstreckung aufweist und mittels einer Vielzahl Schrauben (34) mit der Unterseite (35) des Deckels (7) verschraubt ist.

14. Unterflurfeuer nach Anspruch 13, bei dem die Halteplatte (33) aus Aluminium ausgebildet ist.

15. Unterflurfeuer nach einem der Anspruche 2 bis 14, bei dem jede Durchbrechung des unteren Abschlußelements (6) des Deckels (7) mittels geeigneter Dichtelemente, z.B. mittels O-Ringdichtungen, abgedichtet ist.

16. Unterflurfeuer nach einem der Ansprüche 7 bis 15, bei dem jedes Prisma (10, 11) zwei Schultern (38, 39) aufweist, die den Horizontalabschnitten (24) der Dichtmanschette (21) zugeordnet und an zwei einander gegenüberliegenden Seiten des Prismas (10, 11) angeordnet sind, wobei die Breiten (b, d) der beiden Schultern (38, 39) so bemessen sind, dass das Produkt einer Multiplikation aus der Breite (b) der einen Schulter (38) und dem Horizontalabstand (c) zwischen der Mitte dieser einen Schulter (38) und einer Spitzenkante (37) des Prismas (10, 11) gleich dem Produkt aus der Breite (d) der anderen Schulter (39) und dem Horizontalabstand (e) zwischen der Mitte dieser anderen Schulter (39) und der Spitzenkante (37) des Prismas (10, 11) ist.

17. Unterflurfeuer nach einem der Ansprüche 1 bis 16, das eine oder zwei Lichtquellen (5) aufweist, die gleichartig ausgebildet sind, dessen Prismen (10, 11) gleichartig ausgebildet sind, mittels dem Licht in eine Richtung oder in zwei Richtungen abstrahlbar ist, die zueinander parallel oder geneigt sind, und dessen Deckel (7) wenig, z.B. 4 mm, vorzugsweise maximal 6 mm, über das Oberflächenniveau (2) der Verkehrsfläche vorsteht.

## Claims

1. Flush marker light for traffic areas, for example at airports, and roads, having a housing (3) which is embedded in the traffic area, a light source (5) which is held in the housing (3), a cover (7) by means of which the housing (3) can be sealed and which has an opening region (8), an optical device which is designed as a prism arrangement (9) and is arranged and held in a sealed fashion in the opening region (8) of the cover (7) by means of a sealing sleeve (21), made from an elastomeric material and having two sealing surfaces, and by means of which light can be emitted directionally from the light source (5) and through the cover (7) and a sealing element (12) which is arranged between the cover (7) and the housing (3), **characterized in that** the sealing element (12) belongs to a sealing device (12, 13) which has a further sealing element (13) which is arranged between the cover (7) and a terminating element (6) arranged in the interior space of the housing (3) and holding the light source (5), one sealing element (12) being arranged between lateral surfaces (14 and 17, respectively) on the housing and cover sides, respectively, and orientated in the vertical direction of the flush marker light (1) and the further sealing element (13) being arranged between annular end surfaces (19 and 20, respectively) on the cover and terminating element sides, respectively, and orientated in the horizontal direction, and **in that** the sealing surfaces of the sealing sleeve (21) are of different design, the sealing sleeve (21) having on its outer surface bearing against the opening region (8) of the cover (7) a sealing groove section (23) which is orientated in the vertical direction of the flush marker light (1), as well as a horizontal section (24) free from sealing grooves.

2. Flush marker light according to Claim 1, in which the first sealing element (12) is arranged between two mutually opposite, downwardly pointing surface sections (14, 17) on an inner collar of the cover (7), on the one hand and of the housing (3) on the other hand, and the second sealing element (13) is arranged between the inner collar and a lower terminating element (6) of the cover (7).

3. Flush marker light according to Claim 2, in which the first sealing element (12) is arranged between an outer lateral surface (14) arranged in the vertical direction of the flush marker light (1), of the cover (7) and an inner lateral surface (17) arranged in the vertical direction of the flush marker light (1), of the housing (3).

4. Flush marker light according to Claim 3, in which the first sealing element (12) is held in a receiving slot (15) on the cover side, and is provided with a number of, preferably three, sealing lips (18) directed towards the inner lateral surface (17) of the housing (3).

5. Flush marker light according to one of Claims 1 to 4, in which the second sealing element (13) is arranged between an annular end surface (19), arranged in the horizontal direction of the flush marker light (1), on the inner collar of the cover (7) and an annular surface section (20), arranged in the horizontal direction of the flush marker light (1) and the lower terminating element (6) arranged in the housing (3).

6. Flush marker light according to one of Claims 1 to 5, in which the prism arrangement (9) has two prisms (10, 11) which are seated jointly with two different sealing surfaces in the sealing sleeve (21), which is preferably of unipartite design.

7. Flush marker light according to one of Claims 1 to 6, in which the sealing sleeve (21) has on its outer surface (22) which bears against the opening region (8) of the cover (7) and is free from sealing groove sections sealing ribs (25) of which at least some are arranged on horizontal sections (24) of the outer surface (22) of the sealing sleeve (21).

8. Flush marker light according to one of Claims 1 to 7, in which the sealing sleeve (21) has per prism (10, 11) on its inner surface (29) bearing against the prisms (10, 11) a sealing groove section (30) which is orientated in the vertical direction of the flush marker light (1).

9. Flush marker light according to Claim 8, in which the sealing sleeve (21) has on its inner surface (29) bearing against the prisms (10, 11) and free from sealing groove sections sealing ribs (32) of which at least one is arranged on a horizontal section (31) of the inner surface (29) of the sealing sleeve (21).

10. Flush marker light according to one of Claims 1 to 9, in which each sealing groove section (23, 30) comprises a multiplicity of sealing grooves arranged directly juxtaposed in the vertical direction.

11. Flush marker light according to one of Claims 1 to 10, in which the sealing sleeve (21) has a middle web (26) by means of which the two prisms (10, 11) held in the sealing sleeve (21) are separated, and in relation to which the sealing sleeve (21) is symmetrical.

12. Flush marker light according to one of Claims 1 to 11, in which the sealing sleeve (21) is constructed from a rubber material or the like.

13. Flush marker light according to one of Claims 1 to 12, in which the optical device (9) and the sealing sleeve (21) are fixed by means of a retaining plate (33) in the opening region (8) of the cover (7), the retaining plate (33) having a comparatively large vertical extent and being screwed to the underside (35) of the cover (7) by means of a multiplicity of screws (34).

14. Flush marker light according to Claim 13, in which the retaining plate (33) is constructed from aluminium.

15. Flush marker light according to one of Claims 2 to 14, in which each cutout of the lower terminating element (6) of the cover (7) is sealed by means of suitable sealing elements, for example by means of O-ring seals.

16. Flush marker light according to one of Claims 7 to 15, in which each prism (10, 11) has two shoulders (38, 39) assigned to the horizontal sections (24) of the sealing sleeve (21) and at which two opposite sides of the prism (10, 11) are arranged, the widths (b, d) of the two shoulders (38, 39) being dimensioned such that the product of a multiplication of the width (b) of the one shoulder (38) and the horizontal spacing (c) between the middle of this one shoulder (38) and a top edge (37) of the prism (10, 11) is equal to the product formed from the width (d) of the other shoulder (39) and the horizontal spacing (e) between the middle of this other shoulder (39) and the top edge (37) of the prism (10, 11).

17. Flush marker light according to one of Claims 1 to 16, which has one or two light sources (5) which are of similar design, whose prisms (10, 11) are of similar design, by means of which light can be emitted in one direction or in two directions which are parallel or inclined to one another, and whose cover (7) projects slightly, for example 4 mm, preferably at most 6 mm, above the surface level (2) of the traffic area.

## Revendications

1. Feu de balisage encastré pour des aires de circulation, par exemple sur des aéroports et des routes, comportant
- un boîtier (3) encastré dans l'aire de circulation,
- une source lumineuse (5) logée dans le boîtier (3),
- un couvercle (7) à l'aide duquel le boîtier (3) peut être fermé et qui présente une zone d'ouverture (8),
- un dispositif optique sous forme d'agencement de prismes (9) qui est placé et maintenu de façon étanche dans la zone d'ouverture (8) du couvercle (7) à l'aide d'une manchette d'étanchéité (21) munie de deux surfaces d'étanchéité en un matériau élastomère et qui permet de diffuser et d'orienter de la lumière provenant de la source lumineuse (5) en l'orientant à travers le couvercle (7), et
- un élément d'étanchéité (12) placé entre le couvercle (7) et le boîtier (3),
**caractérisé en ce que**
- l'élément d'étanchéité (12) fait partie d'un dispositif d'étanchéité (12, 13) équipé d'un autre élément d'étanchéité (13), l'autre élément d'étanchéité (13) est placé entre le couvercle (7) et un élément de fermeture (6) qui est placé à l'intérieur du boîtier (3) et qui maintient la source lumineuse (5), l'un des éléments d'étanchéité (12) étant placé entre des surfaces latérales (14 ou 17) côté boîtier ou côté couvercle orientées dans le sens vertical du feu de balisage encastré (1) et l'autre élément d'étanchéité (13) est placé entre des surfaces annulaires frontales (19 ou 20) côté couvercle ou côté élément de fermeture orientées en direction horizontale et
- les surfaces d'étanchéité de la manchette d'étanchéité (21) sont formées différemment, la manchette d'étanchéité (21) étant munie, sur sa surface extérieure appliquée à la zone d'ouverture (8) du couvercle (7), d'un segment de gorge d'étanchéité (23) orienté dans le sens vertical du feu de balisage encastré (1) ainsi que d'un segment horizontal (34) sans segment de gorge d'étanchéité.

2. Feu de balisage encastré selon la revendication 1, dans lequel le premier élément d'étanchéité (12) est placé entre deux portions de surface (14, 17) situées l'une en face de l'autre, dirigées vers le bas et situées sur un collet intérieur d'une part du couvercle (7) et d'autre part du boîtier (3),
et le deuxième élément d'étanchéité (13) est placé entre le collet intérieur et un élément de fermeture (6) inférieur du couvercle (7).

3. Feu de balisage encastré selon la revendication 2, dans lequel le premier élément d'étanchéité (12) est placé entre une surface latérale extérieure (14) - du couvercle (7) - disposée dans le sens vertical du feu de balisage encastré (1) et une surface latérale intérieure (17) - du boîtier (3) - disposée dans le sens vertical du feu de balisage encastré (1).

4. Feu de balisage encastré selon la revendication 3, dans lequel le premier élément d'étanchéité (12) est maintenu dans une rainure de réception (15) côté couvercle et est muni de plusieurs, de préférence trois, lèvres d'étanchéité (18) orientées vers la surface latérale intérieure (17) d u boîtier (3).

5. Feu de balisage encastré selon l'une des revendications 1 à 4, dans lequel le deuxième élément d'étanchéité (13) est placé entre une surface annulaire frontale (19) disposée en direction horizontale du feu de balisage encastré (1) et située sur le collet intérieur du couvercle (7) et une portion de surface annulaire (20) - disposée en direction horizontale du feu de balisage encastré (1) - de l'élément de fermeture (6) inférieur placé dans le boîtier (3).

6. Feu de balisage encastré selon l'une des revendications 1 à 5, dans lequel l'agencement de prismes (9) présente deux prismes (10, 11) qui reposent ensemble dans la manchette d'étanchéité (21), formée de préférence d'une seule pièce et munie de deux surfaces d'étanchéité différentes.

7. Feu de balisage encastré selon l'une des revendications 1 à 6, dans lequel, sur sa surface latérale extérieure (22) exempte de segment de gorge d'étanchéité et appliquée à la zone d'ouverture (8) du couvercle (7), la manchette d'étanchéité (21) présente des cannelures d'étanchéité (25) parmi lesquelles au moins quelques-unes sont disposées sur des segments horizontaux (24) de la surface latérale extérieure (22) de la manchette d'étanchéité (21).

8. Feu de balisage encastré selon l'une des revendications 1 à 7, dans lequel, sur sa surface intérieure (29) appliquée contre les prismes (10,11), la manchette d'étanchéité (21) présente pour chaque prisme (10,11) un segment de gorge d'étanchéité (30) orienté dans le sens vertical du feu de balisage encastré (1).

9. Feu de balisage encastré selon la revendication 8, dans lequel, sur sa surface intérieure (29) exempte de segment de gorge d'étanchéité et appliquée contre les prismes (10,11), la manchette d'étanchéité (21) présente des cannelures d'étanchéité (32) parmi lesquelles au moins une est disposée sur un segment horizontal (31) de la surface intérieure (29) de la manchette d'étanchéité (21).

10. Feu de balisage encastré selon l'une des revendications 1 à 9, dans lequel chaque segment de gorge d'étanchéité (23, 30) se compose d'un grand nombre de cannelures d'étanchéité placées les unes à côté des autres en direction verticale.

11. Feu de balisage encastré selon l'une des revendications 1 à 10, dans lequel la manchette d'étanchéité (31) présente une traverse centrale (26) à l'aide de laquelle les deux prismes (10, 11) logés dans la manchette d'étanchéité (21) sont séparés et par rapport à laquelle la manchette d'étanchéité (21) est symétrique.

12. Feu de balisage encastré selon l'une des revendications 1 à 11, dans lequel la manchette d'étanchéité (21) est en caoutchouc ou en un matériau comparable.

13. Feu de balisage encastré selon l'une des revendications 1 à 12, dans lequel le dispositif optique (9) et la manchette d'étanchéité (21) sont fixés à l'aide d'une plaque de maintien (33) dans la zone d'ouverture (8) du couvercle (7), la plaque de maintien (33) a une extension verticale relativement grande et est vissée au côté inférieur (35) du couvercle (7) à l'aide d'un grand nombre de vis (34).

14. Feu de balisage encastré selon la revendication 13, dans lequel la plaque de maintien (33) est en aluminium.

15. Feu de balisage encastré selon l'une des revendications 2 à 14, dans lequel chaque passage de l'élément de fermeture (6) inférieur du couvercle (7) est rendu étanche à l'aide d'éléments d'étanchéité adaptés, par exemple à l'aide de joints toriques d'étanchéité.

16. Feu de balisage encastré selon l'une des revendications 7 à 15, dans lequel chaque prisme (10, 11) présente deux épaulements (38, 39) associés aux segments horizontaux (24) de la manchette d'étanchéité (21) et placés sur deux côtés qui se font face du prisme (10, 11), les largeurs (b, d) des deux épaulements (38, 39) étant dimensionnées de telle manière que le produit obtenu en multipliant la largeur (b) d'un des épaulements (38) par la distance horizontale (c) entre le milieu de cet épaulement (38) et une arête d'extrémité (37) du prisme (10, 11) soit égal au produit obtenu par la largeur (d) de l'autre épaulement (39) et par la distance horizontale (e) entre le milieu de cet autre épaulement (39) et l'arête d'extrémité (37) du prisme (10, 11).

17. Feu de balisage encastré selon l'une des revendications 1 à 16, équipé d'une ou de deux sources lumineuses (5) de conception identique et dont les prismes (10, 11) ont une conception identique,
- à l'aide duquel la lumière peut être diffusée dans une ou dans deux directions qui sont parallèles ou inclinées l'une à l'autre et
- dont le couvercle (7) dépasse peu, par exemple de 4 mm, de préférence de 6 mm au plus, du niveau (2) de l'aire de circulation.
